# EUROPÄISCHE PATENTSCHRIFT

(11) **EP 0 888 956 B1**
(45) Veröffentlichungstag und Bekanntmachung des Hinweises auf die Patenterteilung: **14.08.2002**
(21) Anmeldenummer: 98108978.2
(22) Anmeldetag: 18.05.1998
(51) Int. Cl.: B62D 35/02

(54) **Hinterachsennaher Bodenbereich eines Kraftfahrzeugs**
Undersurface near the rear axle of a motor vehicle
Surface de dessous proche de l' essieu arrière pour véhicule automobile

(30) Priorität: 04.07.1997 DE 19728573
(43) Veröffentlichungstag der Anmeldung: 07.01.1999
(73) Patentinhaber: Volkswagen Aktiengesellschaft, 38436 Wolfsburg (DE)
(72) Erfinder: Krüger, Helmut, 38442 Wolfsburg (DE); Nitsche, Manfred, 15831 Mahlow (DE)

(56) Entgegenhaltungen:
- CA-A- 1 156 293
- DE-A- 2 158 638
- DE-A- 3 239 946
- JP-A- 9 109 937
- PATENT ABSTRACTS OF JAPAN vol. 95, no. 11, 26. Dezember 1995 & JP 07 215244 A (TOYOTA MOTOR CORP), 15. August 1995

## Beschreibung

Die Erfindung betrifft einen hinterachsennahen Bodenbereich eines Kraftfahrzeugs gemäß dem Oberbegriff des Patentanspruchs 1.

Wie sich gezeigt hat, ist es aus strömungstechnischen Gründen zweckmäßig, den Aufnahmeraum für die Hinterachse gegen den bodennahen Fahrtwind gleichsam abzuschirmen. So beschreibt die gattungbildende DE 32 39 946 A1 zu diesem Zweck eine Abdeckung aus einer biegsamen Folie, die an ihrer Vorder- und ihrer Hinterkante mittels Federn an benachbarten Bodenteilen des Fahrzeugs aufgehängt ist. Bewegt sich die Hinterachse bzw. bewegen sich die Radführungselemente im Fahrbetrieb aus ihrer Normallage nach unten, wird dadurch die Abdeckung ebenfalls unter Verformung nach unten gedrückt, d.h. sie behindert diese Bewegungen nicht. Die aus der JP 09109937 A und der CA 1 156 293 A bekannten Konstruktionen verwenden zur Abschirmung des Aufnahmeraums für die Hinterachse eine spoilerartige Gestaltung des Bodenbereichs des Fahrzeugs in Fahrtrichtung vor dem Aufnahmeraum. Da demgemäß keine materielle Abdeckung vorgesehen ist, behindern diese Maßnahmen die Vertikalbewegungen der Achse bzw. der Radführungsglieder nicht. Die DE-OS 2 158 638 schließlich betrifft ein Heckmotorfahrzeug und soll die Strömung von Kühlluft durch Lufteintrittsschlitze in einer Heckhaube nach vorn zu einer Austrittsstelle am Boden des Fahrzeugs dadurch begünstigen, daß mittels eines vor der Brennkraftmaschine und damit in erheblichem Abstand von der Hinterachse angeordneten Spoilers in der Nähe des Kühlluftaustritts ein Unterdruck erzeugt wird.

Der Erfindung liegt die Aufgabe zugrunde, einen gattungsgemäßen Bodenbereich zu schaffen, der bei einfacher Herstellung robust im Betrieb ist und auch bei in einer tiefen Stellung befindlicher Hinterachse keine störenden, abrupten Vorsprünge im Fahrzeugboden darstellt.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

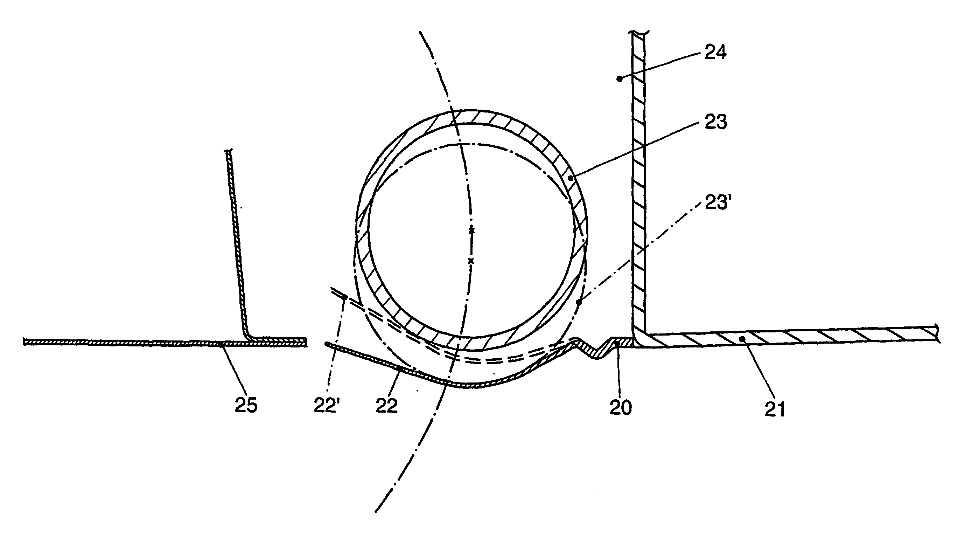

Ein Ausführungsbeispiel der Erfindung wird im folgenden anhand der Zeichnung erläutert, die einen Längsschnitt durch den Bodenbereich eines Kraftfahrzeugs im Bereich der Hinterachse wiedergibt.

Bei 20 ist federnd an der Reserveradmulde 21 die Abdeckung 22 angelenkt, die einen Längsschnitt aufweist, der einem nach oben offenen Winkel ähnelt. Die Länge der Abdeckung 22 ist so gewählt, daß sie bei in ihrer Normalstellung 23 stehender Hinterachse ihre bei 22' angedeutete Stellung einnehmen kann, ohne daß ein derart großer Spalt an der freien Kante der Abdeckung 22 entsteht, daß eine störende Beeinflussung der Luftströmung unter dem Fahrzeug hervorgerufen wird. Sobald die Hinterachse jedoch wieder ihre bei 23' angedeutete unterste Stellung einnimmt, drückt sie die Abdeckung 22 unter Ausnutzung der Elastizität der Anlenkung 20 in die ausgezogen dargestellte Lage, in der die Abdeckung 22 geringfügig in die Strömung hineinragt, jedoch unter Vermeidung sprungartiger Vorsprünge oder dergleichen, so daß auch jetzt die Strömung kaum beeinträchtigt wird.

Der vor dem Aufnahmeraum 24 für die Hinterachse 23 liegende Bodenteil 25 kann durch einen Kraftstoffbehälter oder einen Hauptschalldämpfer realisiert sein.

Wie auch die Beschreibung eines Ausführungsbeispiels zeigt, gestattet die Erfindung mit einfachen, robusten Mitteln eine relativ niedrig bauende Bodengruppe bzw. eine solche Anordnung der Hinterachse, daß sie zeitweilig unter die untere Bodenfläche des Fahrzeugs ragt.

## Patentansprüche

1. Hinterachsennaher Bodenbereich eines Kraftfahrzeugs mit vor und hinter einem Aufnahmeraum (24) für die Hinterachse (23) endenden, eine ebene strömungsgünstige Bodenunterfläche bildenden Bodenteilen (25) sowie mit einer bei Belastung durch die sich abwärts bewegende Hinterachse (23) federnd nachgebenden Abdeckung (22) für den Aufnahmeraum (24), die etwa in Höhe der Bodenunterfläche verläuft, **dadurch gekennzeichnet, daß** die Abdeckung (22) nur an ihrer Vorder- oder Hinterkante federnd angelenkt ist und in Längsschnitten einen nach oben offenen Winkel bildet.

2. Bodenbereich nach Anspruch 1, **dadurch gekennzeichnet, daß** ein Bodenteil durch einen Hauptschalldämpfer gebildet ist.

3. Bodenbereich nach Anspruch 1, **dadurch gekennzeichnet, daß** ein Bodenteil durch einen Kraftstoffbehälter gebildet ist.

## Claims

1. Motor-vehicle floor region in the vicinity of the rear axle, having floor parts (25) which end in front of and behind a receiving space (24) for the rear axle (23) and form a flat, streamlined lower floor surface, and having a covering (22) for the receiving space (24), which covering yields resiliently when loaded by the downwardly moving rear axle (23) and runs approximately at the height of the lower floor surface, **characterized in that** the covering (22) is coupled in the resilient manner only at its front or rear edge and forms an upwardly open angle in longitudinal sections.

2. Floor region according to Claim 1, **characterized in that** a floor part is formed by a main exhaust silencer.

3. Floor region according to Claim 1, **characterized in that** a floor part is formed by a fuel tank.

## Revendications

1. Surface de dessous proche de l'essieu arrière d'un véhicule automobile, comprenant des parties de dessous (25) se terminant devant et derrière un espace de réception (24) pour l'essieu arrière (23), formant une surface inférieure de dessous plane favorable à l'écoulement, ainsi qu'un recouvrement (22) pour l'espace de réception (24), cédant élastiquement en cas de sollicitation par l'essieu arrière (23) se déplaçant vers le bas, lequel recouvrement s'étend approximativement à hauteur de la surface inférieure de dessous, **caractérisée en ce que** le recouvrement (22) n'est articulé de manière élastique qu'à son arête avant ou arrière, et forme en coupes longitudinales un angle ouvert vers le haut.

2. Surface de dessous selon la revendication 1, **caractérisée en ce qu'**une partie de dessous est formée par un silencieux principal.

3. Surface de dessous selon la revendication 1, **caractérisée en ce qu'**une partie de dessous est formée par un réservoir de carburant.
